# EUROPEAN PATENT APPLICATION

(11) **EP 2 040 429 A1**
(43) Date of publication of application: **25.03.2009**
(21) Application number: 07018300.9
(22) Date of filing: 18.09.2007
(51) Int. Cl.: H04L 27/26

(54) **Distributed insertion of dynamic signaling data for time-frequency slicing**

(71) Applicant: Panasonic Corporation, Kadoma-shi Osaka 571-8501 (JP)
(72) Inventor: Petrov, Mihail, 63225 Langen (DE); Kursawe, Thomas, 63225 Langen (DE)
(74) Representative: Grünecker, Kinkeldey, Stockmair & Schwanhäusser Anwaltssozietät

(57) **Abstract**

The present invention relates to improving reception robustness of signaling data in a frame-based communication system with variable slot-allocation. To this end, the present invention provides a method and a corresponding apparatus to maximize the time/frequency diversity of the signaling data. This is achieved by spreading the signaling data evenly over all slots in a frame.

## Description

The present invention relates to frame-based communication systems with variable slot allocation, and in particular to methods for transmitting and receiving signaling information indicating slot allocation and a corresponding apparatus.

### BACKGROUND OF THE INVENTION

Orthogonal Frequency-Division Multiplexing (OFDM) is a digital multi-carrier modulation scheme, which uses a large number of closely-spaced orthogonal subcarriers. Each sub-carrier is modulated at a low symbol rate with a conventional modulation scheme such as quadrature amplitude modulation, maintaining data rates similar to conventional single-carrier modulation schemes in the same bandwidth.

The advantage of OFDM over single-carrier schemes is its ability to cope with severe channel conditions - for example, attenuation of high frequencies at a long copper wire, narrowband interference and frequency-selective fading due to multipath - without complex equalization filters. Channel equalization is simplified because OFDM may be viewed as using many slowly-modulated narrowband signals rather than one rapidly-modulated wideband signal. Low symbol rate makes the use of a guard interval between symbols affordable, making it possible to handle time-spreading and eliminate inter-symbol interference.

The present invention relates to OFDM communication systems, specifically the new DVB-T2 standard, where a constant-capacity channel carries multiple variable-data-rate services. The OFDM signal is divided into frames of constant duration, which contain a fixed number of OFDM cells. An OFDM cell is defined as the complex data carried on a certain subcarrier for a given OFDM symbol.

The envisaged system uses a plurality of radio frequency (RF) channels for transmitting a plurality of variable-bit-rate services. Normally, the number of services is larger than the number of RF channels. The services are multiplexed onto an OFDM using time-frequency slicing (TFS).

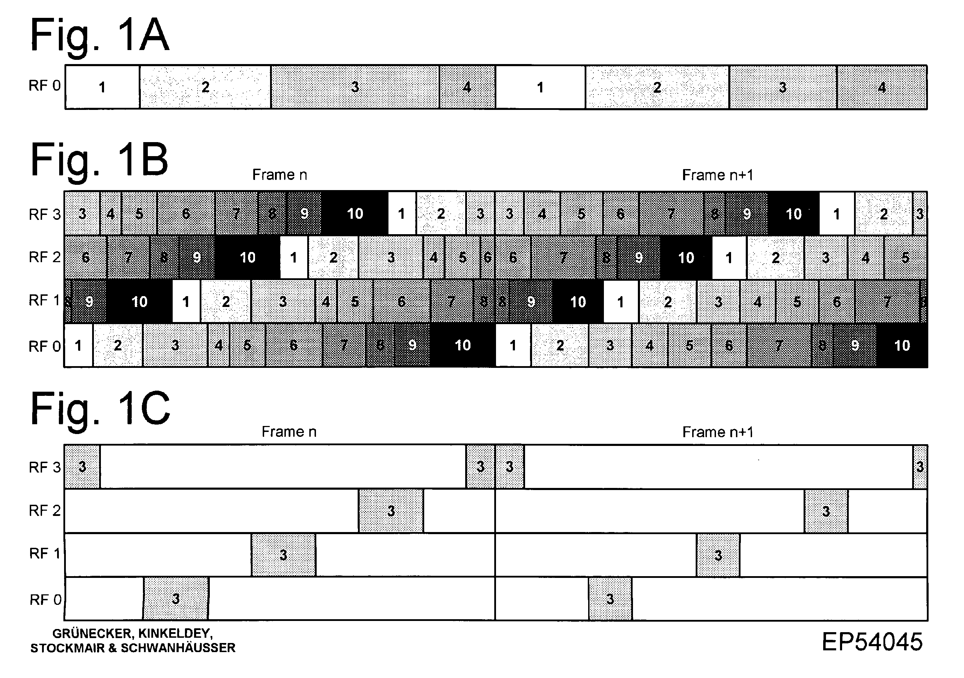

Figure 1B shows two OFDM frames of a TFS example for 4 RF channels and 10 services. In the particular case when only one RF channel is available, TFS is reduced to TS (time slicing), as shown in Figure 1A.

The contiguous data blocks belonging to a service are referred to as slots or slices. Since the services have variable bit rate, the slot sizes and positions are also variable, changing from frame to frame. If the receiver has a single tuner, the allocation of the slots on the OFDM frame must ensure that there is a sufficient gap between the slots of the same service on different RF channels to allow the tuner to hop from one channel to the next.

As an example, Figure 1C shows the slot allocation for service 3 only. The services multiplexed onto the frame are also referred to as physical-layer pipes (PLP's).

In order to receive a service, the tuner needs to know the slot allocation of that service only. The knowledge of the slot allocation for other services is not required. In the most general case, the slot allocation for a service is fully defined by the position and the length of each slot belonging to that service. Normally, each service contains one slot on each RF channel per frame. Thus, the number of slices in a frame is equal with the number of RF channels. However, it may be also possible to have more than one slot on each RF channel per frame.

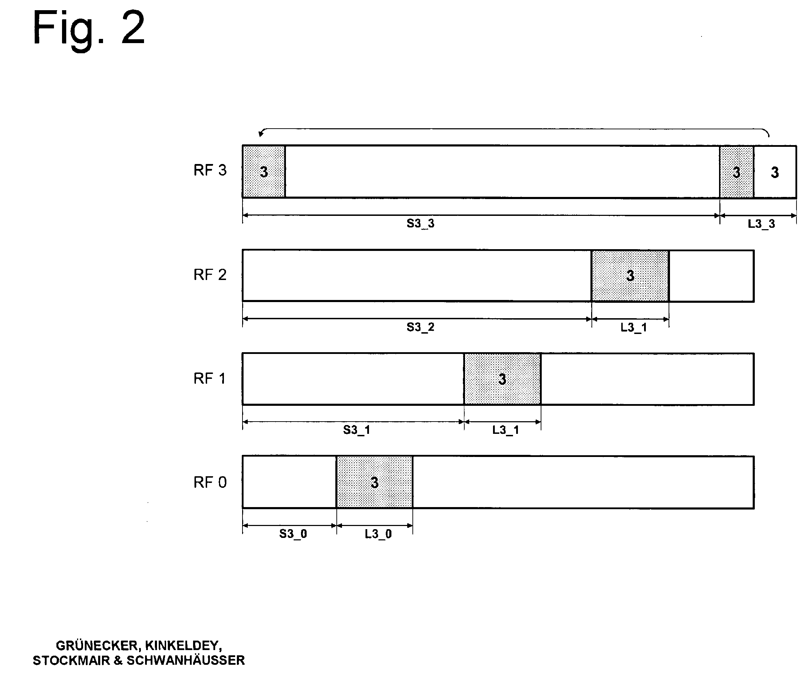

Figure 2 shows the definition of the addressing parameters for service 3 in the considered example. If a coordinate exceeds the frame length, it is folded back to the beginning of the frame, resulting in a circular addressing. In the figure, OX_Y and LX_Y are the slot offset and length of the slot SX_Y, i.e. for service X in RF channel Y. Other addressing schemes may be devised as well. The present invention is not restricted to a particular addressing scheme. What is important is that the receiver needs to know where to find the slots for the service it receives, therefore the slot allocation needs to be signaled in each frame, for all services in the TFS multiplex. In the following, this signaling is referred to as dynamic L1 (layer 1, i.e. physical) signaling. Besides the slot allocation itself, other parameters that change from frame to frame may be signaled using dynamic L1 signaling.

The signaling data needs to have very good reception robustness, significantly higher than that of the payload data, in order to ensure that the former is always received, even in reception conditions that make the latter unrecoverable. The reason why this signaling data is so critical is that the loss thereof in a frame leads to the loss of the entire payload data for the respective frame.

So far, two solutions for the transmission of the dynamic L1 signaling data have been proposed, each of which, however, suffers from specific disadvantages.

When discussing and comparing different solutions, the following example will be used:
- 16 active subcarriers per OFDM symbol,
- 96 OFDM symbols per frame,
- 477 OFDM cells in the considered service.

The resulting number of OFDM cells per frame will be thus 16*96=1536.

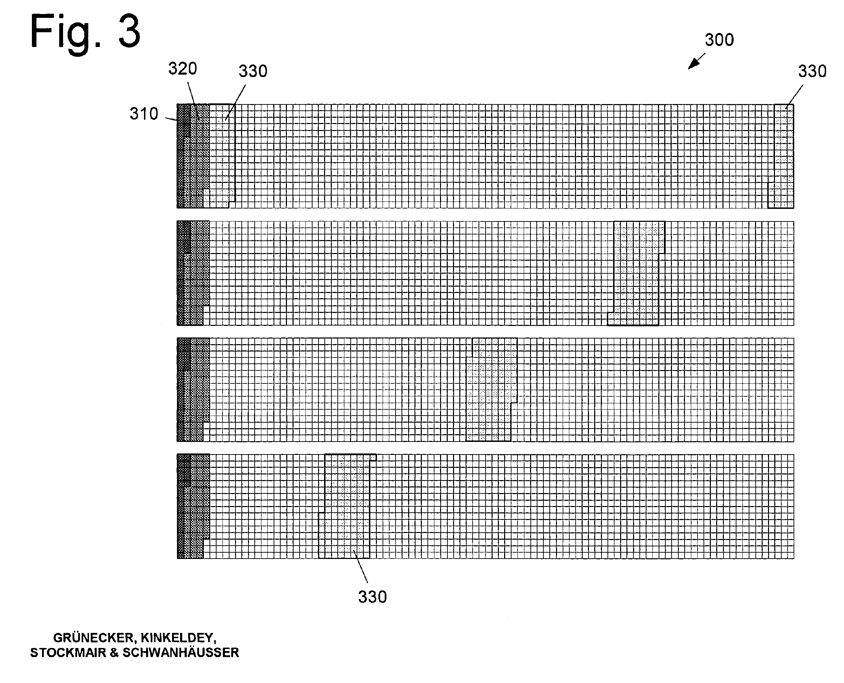

Figure 3 illustrates a first conventional method for transmitting the L1 dynamic signaling data. According to this method, the whole L1 dynamic signaling data 320 for all services is placed in a preamble at the beginning of each frame 300, together with the static L1 signaling data 310. The latter comprises all parameters that do not change or change occasionally, such as the number of services in the TFS multiplex. The gray shaded squares 310 in Fig. 3 are the OFDM cells allocated to static L1 signaling, the dark shaded squares 320 are the cells for dynamic L1 signaling, while the light shaded squares 330 are the payload cells, grouped into TFS slots.

In the following, we refer to this scheme as preamble signaling. The main problem with this approach is the limited diversity, since the tuner receives the whole dynamic L1 data for the frame on a single RF channel, over a very small number of OFDM symbols. For large OFDM symbols, the whole dynamic L1 data may not even occupy a full symbol. If the RF channel received by the tuner at the beginning of the frame has bad reception (due to Doppler fading or bad coverage) or if a transient impulsive interference occurs, the whole dynamic L1 signaling data will be corrupted, leading to the loss of the payload data for the entire frame. Even when the signaling data has a much higher robustness than the payload data, there is always the risk that the beginning of the frame gets corrupted.

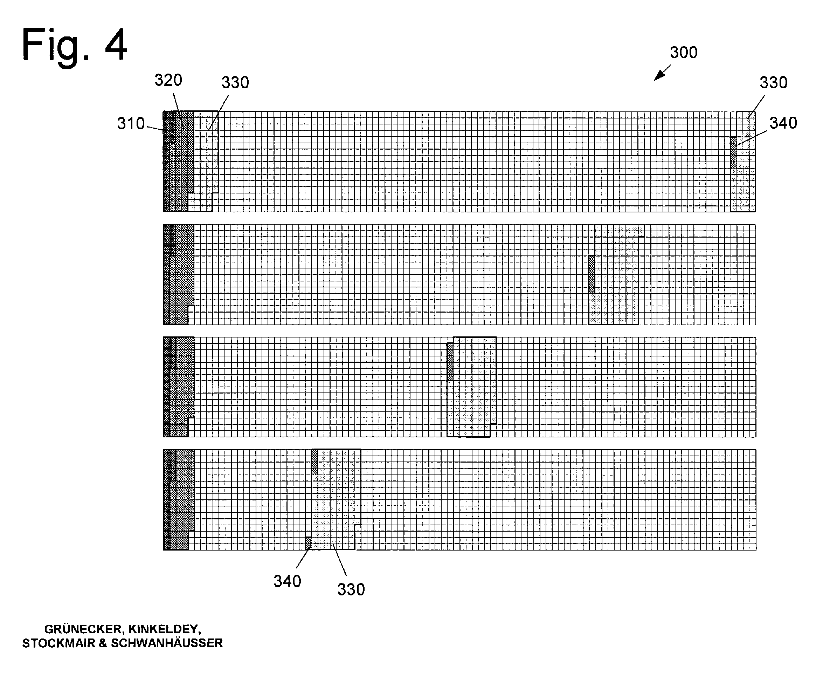

Figure 4 illustrates a second conventional method for transmitting the L1 dynamic signaling data. In order to overcome the limited diversity problem, the dynamic L1 signaling cells are transmitted as a block 340 in the beginning of each slot, in addition to the beginning of the frame. We refer to this scheme as block embedded signaling. For each service, only the dynamic L1 data required for receiving that service is transmitted. In the example of Fig. 4, the whole embedded dynamic L1 signaling for the considered service is assumed to consist of 23 OFDM cells.

While this solution exploits the macro-diversity between the different RF channels, the time/frequency diversity for a given RF channel is still very limited since all signaling cells are transmitted as a block in the beginning of each slot. For a given slot, the diversity of the embedded signaling data is even more limited than that of the preamble signaling data, because of the much smaller size of the former.

It must be mentioned that the embedded signaling does not replace the preamble signaling, only complements it. Whenever the receiver fails to decode the former, it needs to recover by receiving the latter. The same is required for the initial reception of a service or when the user changes the service (zapping). During normal reception, the receiver does not have to receive the preamble signaling data. Thus, preamble signaling can be regarded as periodic entry points for accessing service data.

The conventional solutions suffer from limited diversity, which is even lower than that of the payload data. The problem to be solved is how to increase the diversity of the embedded signaling to match that of the payload data.

### SUMMARY OF THE INVENTION

The aim of the present invention is to improve reception robustness of the signaling data.

This is achieved by the features as set forth in the independent claims. Preferred embodiments are the subject matter of dependent claims.

Because of time/frequency-selective Rayleigh fading, the time/frequency diversity of the dynamic L1 signaling data must be maximized in order to ensure the best possible reception robustness. It is thus the particular approach of the present invention to maximizes the time/frequency diversity by spreading the signaling data over all the in a frame.

According to a first aspect of the present invention, a method for transmitting signaling information in a frame-based communication system, wherein each frame comprises a plurality of slots and each slot comprises a plurality of cells, is provided. The method comprises the steps of obtaining signaling information, said signaling information consisting of a plurality of words; obtaining payload data to be transmitted within a slot of a current frame, said payload data consisting of a plurality of words; mapping each word of the signaling information and the payload data to a distinct cell of said slot in accordance with a predefined mapping scheme so that cells to which a word of the signaling information is mapped are distributed over said slot.

According to a further aspect of the present invention, a method for receiving signaling information in a frame-based communication system with variable slot allocation, wherein each frame comprises a plurality of slots and each slot comprises a plurality of cells, is provided. The method comprises the steps of receiving a block of data transmitted within a slot of a current frame and demultiplexing the block of data in accordance with the predefined mapping scheme in order to recover signaling information and payload data.

According to a further aspect of the present invention, an apparatus for transmitting signaling information in a frame-based communication system, wherein each frame comprises a plurality of slots and each slot comprises a plurality of cells, is provided. The encoding apparatus comprises a first input means for obtaining signaling information, said signaling information consisting of a plurality of words; a second input means for obtaining payload data to be transmitted within a slot of a current frame, said payload data consisting of a plurality of words; a mapping means for mapping each word of the signaling information and the payload data to a distinct cell of said slot in accordance with a predefined mapping scheme so that cells to which a word of the signaling information is mapped are distributed over said slot.

According to a further aspect of the present invention, an apparatus for receiving signaling information in a frame-based communication system with variable slot allocation, wherein each frame comprises a plurality of slots and each slot comprises a plurality of cells, is provided. The apparatus comprises a slot extractor for receiving a block of data transmitted within a slot of a current frame and a demultiplexer for demultiplexing the block of data in accordance with the predefined mapping scheme in order to recover signaling information and payload data.

According to a further aspect of the present invention, a cell type generator for a frame-based communication system is provided. The cell type generator receives the number of signaling cells (M) and the number of payload cells (N) within a slot of a current frame and generates an output signal indicating sequentially for each cell of said slot a cell type, the cell type being either signaling or payload, in accordance with the predefined mapping scheme.

Preferably, at least two consecutive words of the signaling information are mapped to two non-consecutive cells, and at least one word of the payload data is mapped to the at least one cell inbetween the two non-consecutive cells. In this manner, the signaling information can be spread over the entire slot so as to increase time diversity.

Preferably, cells to which a word of the signaling information is mapped are evenly distributed over said slot. Preferably, the first word of the signaling information is mapped to the first cell of said slot. Further, the last word of the signaling information is preferably mapped to the last cell of said slot. Distributing the signaling information as evenly as possible maximizes time diversity and therewith reception robustness.

Preferably said slot consists of a plurality of contiguous cells. Alternatively, said slot comprises at least two sub-slots, each sub-slot consisting of a plurality of contiguous cells, the at least two sub-slots being arranged within the current frame so that they are separated by cells of the current frame that are not part of said slot. In this manner, the present invention can also be applied to communication systems wherein payload and/or signaling data is spread over several (sub-)slots.

Preferably, the communication system is based on orthogonal frequency-division multiplexing. Further, the signaling information preferably indicates a slot allocation in a communication system with variable slot allocation. More preferably, the signaling information indicates offset and length of a future slot within a future frame, said future slot carrying payload data related to the payload data transmitted within the current frame. In this manner, the present invention can be applied to the DVB-T2 standard.

Preferably, a conceptual position is computed for each word of the signaling information, the conceptual positions of all words of the signaling information being equidistant elements of a predetermined interval of numbers, each cell of the slot being associated with a distinct element of said predetermined interval of numbers, and wherein each word of the signaling information is mapped to a cell in accordance with the conceptual position and the association of cells to elements of the predetermined interval of numbers. In this manner, the signaling cells can be spread as evenly as possible over the slot, despite potentially incommensurable numbers of signaling words and slot cells.

Preferably, the predetermined interval of numbers consists of non-negative integers smaller than or equal to the number of cells within said slot minus 1 so that each word of the signaling information can be mapped to a cell of said slot, said cell being indicated by the conceptual position (k) of the word.

Preferably, the predetermined interval of numbers consists of non-negative reals smaller than or equal to the number of cells within said slot minus 1. In this case a mapping index for each word of the signaling information is computed by applying a rounding operator to the conceptual position of the word, the mapping index being an integer indicating a cell of said slot. Each word of the signaling information is then mapped to the cell indicated by the mapping index of the word. In this manner, the signaling words can be spread over the slot as evenly as possible, even if the numbers of signaling words and slot cells are incommensurable.

Preferably, the mapping index is a non-negative integer smaller than the number of cells within said slot. In this case, the mapping index can be directly used for addressing cells of the slot.

Preferably, a first predetermined number is assigned to the conceptional position if the word is the first word of the signaling information, the first predetermined number being an element of the predetermined interval of numbers, a second predetermined number is assigned to the conceptional position if the word is the last word of the signaling information, the second predetermined number being an element of the predetermined interval of numbers, and conceptual positions larger than the first predetermined number and smaller than the second predetermined number are assigned to words other than the first and the last word of the signaling information. In this case, time diversity can be maximized. In addition, more general setting are possible, for instance in order to achieve integer increments within the set of conceptual positions.

Preferably, computing the conceptual position of a current signaling word comprises adding an increment value to the conceptual position of a signaling word preceding the current signaling word. This allows for a simple determination of the conceptual position of each signaling word in a sequential fashion. Alternatively, computing the conceptual position of a current signaling word comprises multiplying an index indicating a position of the current signaling word within the signaling information obtained with an increment value. In the latter case, computing the conceptual position of a current signaling word could further comprise adding the first predetermined number to a result of the multiplying step. In this manner, the conceptual positions can computed independently of each other.

Preferably, the increment value is the ratio of the difference of the second and the first predetermined number and the number of signaling words obtained minus 1. This ensures that the conceptual positions are spread over the entire interval defined by the first and the second predetermined number. Alternatively, the increment value is the largest integer smaller than the ratio of the difference of the second and the first predetermined number and the number of signaling words obtained minus 1. In this case, the increment value is an integer, thus reducing computational effort.

Preferably, the conceptual position of a signaling word is expressed as a fraction with denominator equal to the number of signaling words obtained minus 1. Further, computing the conceptual position of a current signaling word preferably comprises adding the difference of the second and the first predetermined number to the numerator of the conceptual position of a signaling word preceding the current signaling word. This is an alternative way of sequentially computing the conceptual positions, allowing for straightforward hardware implementation.

Preferably, the first predetermined number is an integer. Further, the second predetermined number is preferably an integer. In this case, integer arithmetic may be widely employed.

Preferably, the first predetermined number is equal to zero. Further, the second predetermined number is equal to the number of cells within said slot minus 1. In this case, the first and/or the last signaling word is mapped to the first and/or the last cell, respectively, so as to maximize time diversity.

Preferably, the second predetermined number is greater than or equal to the first predetermined number plus the number of words of signaling information obtained minus 1. This guarantees that all signaling words can be mapped to distinct cells.

Preferably, the rounding operator yields the largest integer smaller than or equal to the conceptual position. Alternatively, the rounding operator yields the smallest integer greater than or equal to the conceptual position. These two options correspond to conventional rounding down and rounding up, respectively, which can be implemented most easily.

More preferably, the rounding operator yields the largest integer smaller than or equal to the conceptual position plus 0.5. Alternatively, the rounding operator yields the smallest integer greater than or equal to the conceptual position minus 0.5. These two options correspond to conventional rounding to the next integer, either rounding down or rounding up in case of the fractional part being equal to one half. These rounding schemes can also be easily implemented and lead to a more even distribution of signaling words.

Even more preferably, however, the rounding operator yields the largest integer smaller than or equal to the conceptual position plus 0.5 if the conceptual position is smaller than half the number of cells within said slot and yields the smallest integer greater than or equal to the conceptual position minus 0.5 if the conceptual position is greater than half the number of cells within said slot. Alternatively, the rounding operator yields the largest integer smaller than or equal to the conceptual position plus 0.5 if the conceptual position is greater than half the number of cells within said slot and yields the smallest integer greater than or equal to the conceptual position minus 0.5 if the conceptual position is smaller than half the number of cells within said slot. In other words, the rounding operator may either round up or down to the next integer if the fractional part of the conceptual position is one half, depending on whether the conceptual position is greater or smaller than half the number of cells within said slot. Each of these two options yields a symmetric - and hence more even distribution of mapping indices.

In conjunction with the above symmetric rounding scheme, the rounding operator may either yield the largest integer smaller than or equal to the conceptual position plus 0.5 if the conceptual position is equal to half the number of cells within said slot or the smallest integer greater than or equal to the conceptual position minus 0.5 if the conceptual position is equal to half the number of cells within said slot. In other words, the rounding operator may either round up or down to the next integer if the fractional part of the conceptual position is one half and if the conceptual position is equal to half the number of cells within said slot.

The above and other objects and features of the present invention will become more apparent from the following description and preferred embodiments given in conjunction with the accompanying drawings, in which:
- Fig. 1A: is a schematic drawing illustrating multiplexing of service data onto an OFDM frame using time slicing (TS);
- Fig. 1B: is a schematic drawing illustrating multiplexing of service data onto an OFDM frame using time-frequency slicing (TFS);
- Fig. 1C: is a schematic drawing illustrating the arrangement of service data of a single service within the OFDM frame of Fig. 1 B;
- Fig. 2: illustrates an example of slice addressing within a frame;
- Fig. 3: illustrates the conventional method of transmitting dynamic L1 in the beginning of the frame;
- Fig. 4: illustrates the conventional method of transmitting dynamic L1 in the beginning of each slot;
- Fig. 5A: is a schematic drawing illustrating 23 signaling cells and 477 payload cells;
- Fig. 5B: illustrates an exemplary block of cells after multiplexing signaling with payload cells in accordance with a first embodiment of the present invention;
- Fig. 5C: illustrates the resulting sub-blocks after the partitioning of the multiplexed block in accordance with the first embodiment of the present invention;
- Fig. 5D: illustrates the resulting cell allocation in accordance with the first embodiment of the present invention;
- Fig. 6A: is a schematic drawing illustrating 23 signaling cells and 477 payload cells;
- Fig. 6B: illustrates the resulting sub-blocks after the partitioning of the signaling and payload blocks in accordance with a second embodiment of the present invention;
- Fig. 6C: illustrates the resulting sub-blocks after multiplexing the signaling cells with the payload cells in accordance with the second embodiment of the present invention;
- Fig. 6D: illustrates the resulting cell allocation in accordance with the second embodiment of the present invention;
- Fig. 7A: is a schematic drawing illustrating the conceptual spacing of the signaling cells according to an embodiment of the present invention;
- Fig. 7B: is a schematic drawing illustrating the conceptual spacing of the signaling cells according to another embodiment of the present invention;
- Fig. 8: is a schematic drawing illustrating the method for computing mapping indices by rounding of the conceptual positions according to embodiments of the present invention;
- Fig. 9: is a schematic drawing illustrating the common grid of signaling and slot cells according to the present invention;
- Fig. 10A: is a block diagram of a hardware implementation of the mapping unit according to an embodiment of the present invention;
- Fig. 10B: is a block diagram of a hardware implementation of the mapping unit according to another embodiment of the present invention;
- Fig. 11A: is a schematic drawing illustrating the mapping of signaling cells to slot cells according to another embodiment of the present invention;
- Fig. 11B: is a block diagram of a hardware implementation of the mapping unit according to the embodiment of the present invention shown in Fig 11A;
- Fig. 12: is a block diagram of a generic cell type generator according to an embodiment of the present invention;
- Fig. 13A: is a block diagram illustrating a possible solution for the connection of the cell type generator in the transmitter according to an embodiment of the present invention; and
- Fig. 13B: is a block diagram illustrating a possible solution for the connection of the cell type generator in the receiver according to an embodiment of the present invention.

### DETAILED DESCRIPTION

The main idea of the present invention is to distribute the embedded signaling cells evenly over all the slots of a certain service by multiplexing the signaling cells with the payload data cells.

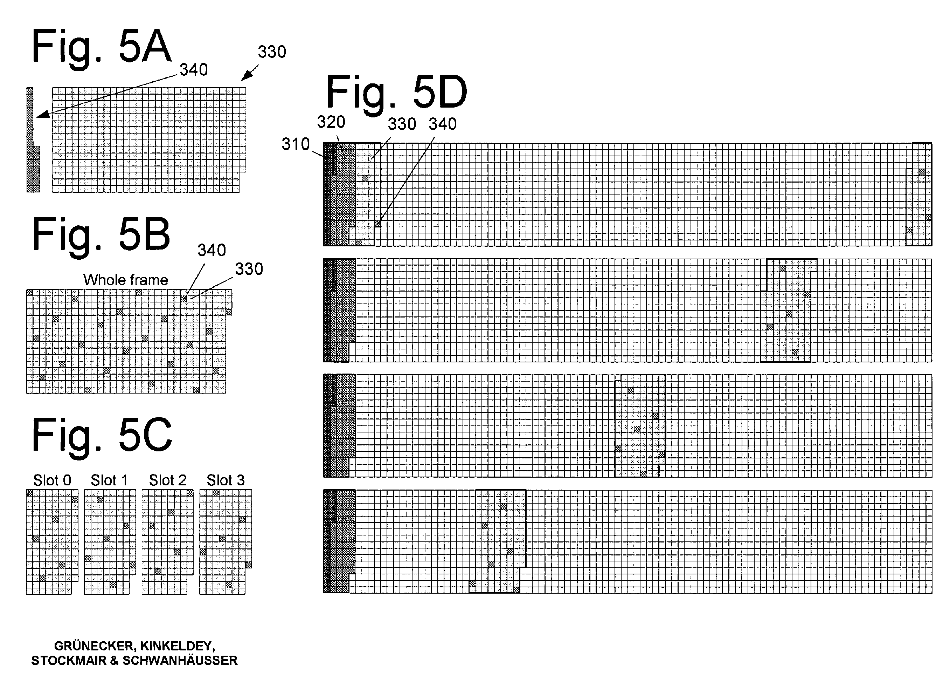

Figure 5 is a schematic drawing illustrating the transmission of signaling information according to a first embodiment of the present invention.

The example illustrated in the figures relates to the transmission of 477 OFDM cells of payload data of the considered service (330), 69 OFDM cells of preamble static L1 signaling (310), 56 OFDM cells of preamble dynamic L1 signaling (320), and 23 OFDM cells of embedded dynamic L1 signaling (340) within one frame consisting of a total of 1536 OFDM cells (16 subcarriers * 96 symbols). In our example, we consider that there is exactly one slot in each RF channel, for each service. However, a practical TFS scheduler might choose to have two slots in each RF channel.

Figure 5A shows the embedded signaling cells 340 and the payload data cells 330 for this case.

According to the first embodiment of the present invention, all signaling cells are first multiplexed with all the payload cells of that frame. Figure 5B shows the result of the multiplexing step, viz. the resulting block consisting of 500 cells. The details of the multiplexing algorithm will be described below in greater detail.

In a second step, this block is then partitioned into a plurality of sub-blocks. The resulting sub-blocks, which consist in this example of 126, 125, 125, and 124 cells respectively, are shown in Figure 5C.

Finally, these sub-blocks are then mapped to slots by the TFS scheduler. The resulting frame is shown in Figure 5D.

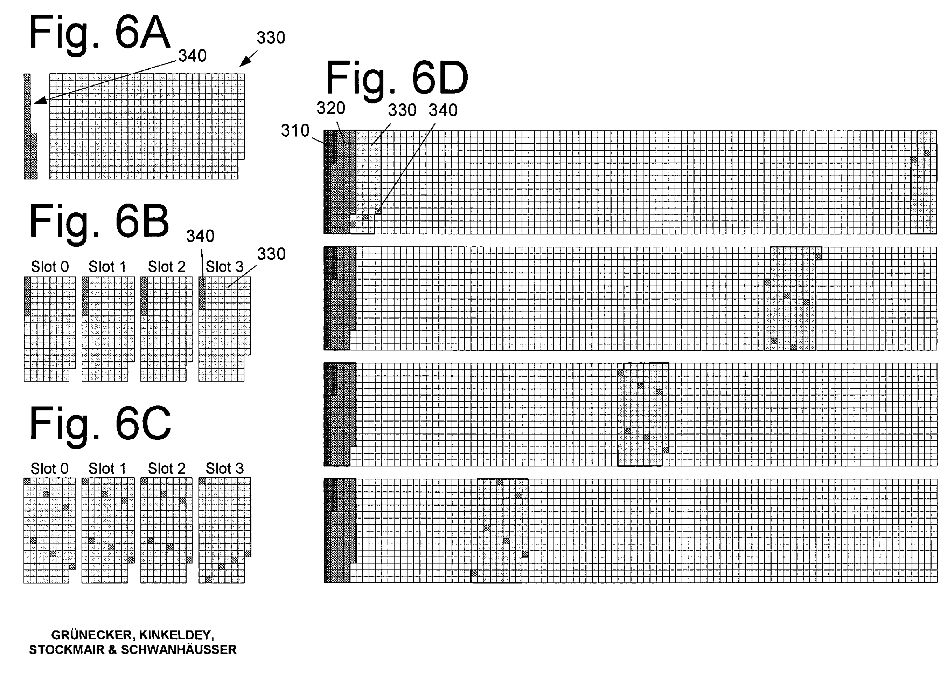

Figure 6 is a schematic drawing illustrating the transmission of signaling information according to a second embodiment of the present invention. The number of cells employed in the illustrated example are identical to those of Fig. 5. Hence, Figure 6A showing the embedded signaling cells 340 and the payload data cells 330 for this case, is basically identical to Fig. 5A.

According to the second embodiment of the present invention, the block of all signaling cells and the block of payload cells are first independently partitioned into a plurality of sub-blocks, so that the number of signaling sub-blocks equals the number of payload sub-blocks. The resulting sub-blocks are shown in Figure 6B.

In a second step, the signaling cells are multiplexed with the payload cells, for each pair of sub-blocks. The resulting multiplexed sub-blocks, consisting in this example of 126, 125, 125, and 124 cells respectively, are shown in Figure 6C. The details of the multiplexing algorithm will be described below in greater detail.

Finally, these sub-blocks are mapped to slots by the TFS scheduler. The resulting frame is shown in Figure 6D. This last step is common to both embodiments.

The particular numbers of cells employed in the above example are merely for illustrative purposes and do not imply any restriction of the present invention. Rather, the present invention can be applied to any combination of numbers of cells within a frame, numbers of slots per frame, numbers of signaling and payload data, etc.

Both of the above embodiments embodiments contain a multiplexing step. In the first embodiment, this step is performed before the partitioning into blocks, whereas in the second embodiment it is performed after the partitioning.

The multiplexing of signaling with payload cells can also be regarded as a mapping problem. For example, the multiplexing of M signaling cells with N payload cells can be regarded as the mapping of M signaling cells or N payload cells onto the resulting block of M+N cells. Preferably, the mapping algorithm computes the indices of the payload cells, the remaining being signaling cells. More preferably, however, it computes the indices of the signaling cells, the remaining being payload cells.

In the following, the computing of indices of the signaling cells is explained in greater detail. As it is obvious to a person skilled in the art, the same procedures may also be applied to compute indices for the payload cells instead of the signaling cells. Further, the explanation of the mapping algorithm is restricted to the case of mapping data words of the (embedded dynamic L1) signaling information to cells of a single slot. A person skilled in the art will appreciate that this algorithm may likewise be employed for mapping data words to a data block which is to be further partitioned into a plurality of sub-blocks, that are to be transmitted by a plurality of slots (first embodiment), as well as for independently mapping a subset of the entire embedded dynamic L1 signaling information to a plurality of slots.

According to the present invention, signaling cells are distributed over the entire slot in order to maximize time diversity. The present invention provides a solution to the problem of how to map the signaling cells on the cells of the slot, so that the former are evenly spaced over the entire slot.

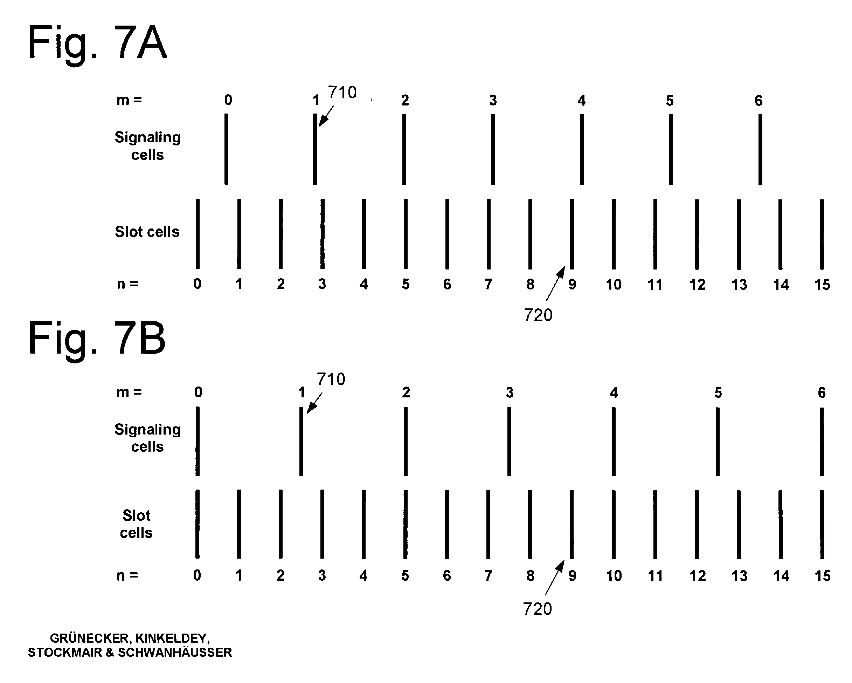

The main idea of the present invention is illustrated in Fig. 7A. As a first step, a conceptual position 710 is assigned to each signaling cell (upper row in Fig 7A). The conceptual position may be represented by a real number. In general, the conceptual position does not coincide with the position of one of the slot cells 720, which are located at integer "positions" within the slot (lower row in Fig. 7A). In order to arrange the signaling cells as evenly as possible on the slot, the conceptual positions are equidistant, i.e., the difference between the conceptual position of two consecutive signaling cells is constant for all signaling cells.

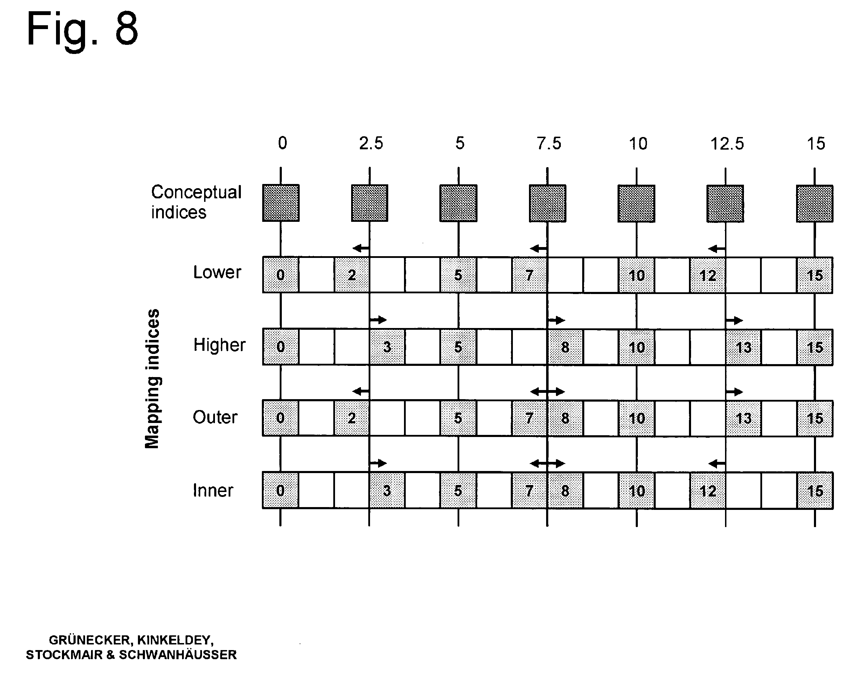

In the second step, each signaling cell is mapped to the slot cell that is located closest to its conceptual position. The actual mapping position of each signaling cell may for instance be derived from the conceptual position by applying a rounding operator. This will be explained in greater detail below in conjunction with Fig. 8.

Figure 7B illustrates a specific embodiment of the present invention, wherein the first signaling cell (m=0) is mapped to the first slot cell (n=0) and the last signaling cell (m=6) is mapped to the last slot cell (n=15). According to this embodiment, the signaling cells are spread evenly over the entire slot, thus maximizing time diversity.

The merits of the inventive mapping solution are twofold. First, it guarantees that the signaling cells are distributed as evenly as possible over the whole slot, thus maximizing the time diversity. Second, the resulting mapping depends only on the number of signaling and payload cells. As the number of slot cells is usually known, only the number of signaling cells needs to be signaled to the receiver, not the actual mapping pattern, in order to allow the receiver to demultiplex the signaling information.

In the following, a more specific description of the mapping process is provided. We need to map *M* signaling cells and *N* payload cells onto a slot of *M*+*N* cells. We define m as the signaling cell index from 0 to *M*-1 and *n* as the slot cell index from 0 to *M*+*N*-1.

The first step is to map signaling cell 0 to a conceptual position k₀ and signaling cell M-1 to a conceptual index k_{M-1}, where 0 ≤ k₀ < k_{M-1} ≤ M+N-1. These conceptual positions may also be real valued, not necessarily integers.

The remaining *M*-2 signaling cells are conceptually spaced evenly between signaling cells 0 and *M*-1, as shown in Figure 7A for *M*=7 and M+N=16. This case will be considered as an example from now on. Obviously, these numbers are merely exemplary and do not imply any restriction regarding the applicability of the present invention. In fact, the present invention can be carried out for any combination of number of signaling cells *M* and number of payload cells *N*.

The resulting conceptual positions are an arithmetical progression of *M* elements from k₀ to k_{M-1}. The difference of two successive indices will thus be *D*=(k_{M-1}-k₀)/(M-1). The initial k₀ and k_{M-1} must be chosen so that this difference is at least 1 in order to ensure that all signaling cells are mapped to distinct slot cells. This condition can be also expressed as: k_{M-1}- k₀ ≥ M-1. The general expression for the conceptual indices will be: kₘ = k₀+*m D* = k₀+m(k_{M-1}- k₀)/(M-1), where *m* is the signaling cell index ranging from 0 to M-1.

The actual integer slot indices (mapping positions) of the signaling cells are obtained by rounding the real conceptual indices computed in the previous step: pₘ = *round*(kₘ)*.* The result will be *M* distinct indices between 0 and *M*+*N*-1, in ascending order.

According to a preferred embodiment of the present invention, the first signaling cell is mapped to the first slot cell (k₀ = 0) and/or the last signaling cell is mapped to the last slot cell (*k*_{*M*-1} = *M*+*N*-1). In this case the first step described above reduces to mapping signaling cell 0 to slot cell 0 and signaling cell *M*-1 to slot cell *M*+*N*-1. The remaining *M*-2 signaling cells are then conceptually spaced uniformly between 0 and *M*+*N*-1, as shown in Figure 7B for *M*=7 and *M*+*N*=16.

The conceptual spacing between the signaling cells, normalized to the spacing of the slot cells, is thus *D_{M}* = (*M*+*N*-1)/(*M*-1). D_{M} is greater than 1, except when *N*=0. The resulting conceptual positions of the signaling cells can be expressed as: *k*ₘ = *m*×*D*_{M}, where *m*∈[0; *M*-1].

The actual indices (mapping positions) of the signaling cells on the slot are determined by rounding the conceptual positions: *pₘ* = *round*(*m*(*M*+*N*-1)/(*M*-1))*,* where *m*∈[0; *M*-1]. It can be easily verified that *pₘ* = 0 for *m* = 0 and that *pₘ* = *M*+*N-*1 for *m*=*M*-1.

The *round* operator rounds a real value to the nearest integer. However, when its argument is of the form *X*.5, where *X* is an integer, *round* has an undefined behavior. A total of four possibilities exist, as shown in Fig. 8:
1. "Lower": round towards the next lower integer
2. "Higher": Round towards the next higher integer
3. "Outer": round towards the nearest end of the [0; *N*-1] interval
4. "Inner": round towards the middle of the [0; *N*-1] interval

The conceptual positions in this example are: 0, 2.5, 5.0, 7.5, 10.0, 12.5, 15.0. The example has been chosen so as to contain conceptual positions of the form X.5. In Fig. 8, the arrows show the rounding direction. It can be seen that for "lower" and "higher" rounding, the resulting pattern is not symmetrical and the signaling cells with conceptual positions of form X.5 will have a consistent offset of -0.5 or +0.5. Therefore, "outer" and "inner" are considered as the preferred embodiments of the rounding operator.

For "outer" and "inner" rounding, hereafter referred to as symmetrical rounding, the decision to round to the next lower or higher integer depends on whether the conceptual position is lower or higher than the middle of the interval, (M+N-1)/2. An undefined case occurs when M+N is even and M is odd. In this case, the conceptual position of the middle signaling cell coincides with the middle of the interval and we can chose to round either to the next lower or to the next higher integer.

The above generic algorithm can be implemented by repeating a sequence of two operations: an accumulation (summation) of an increment value and a rounding. Therefore, both hardware and software implementations can be envisaged.

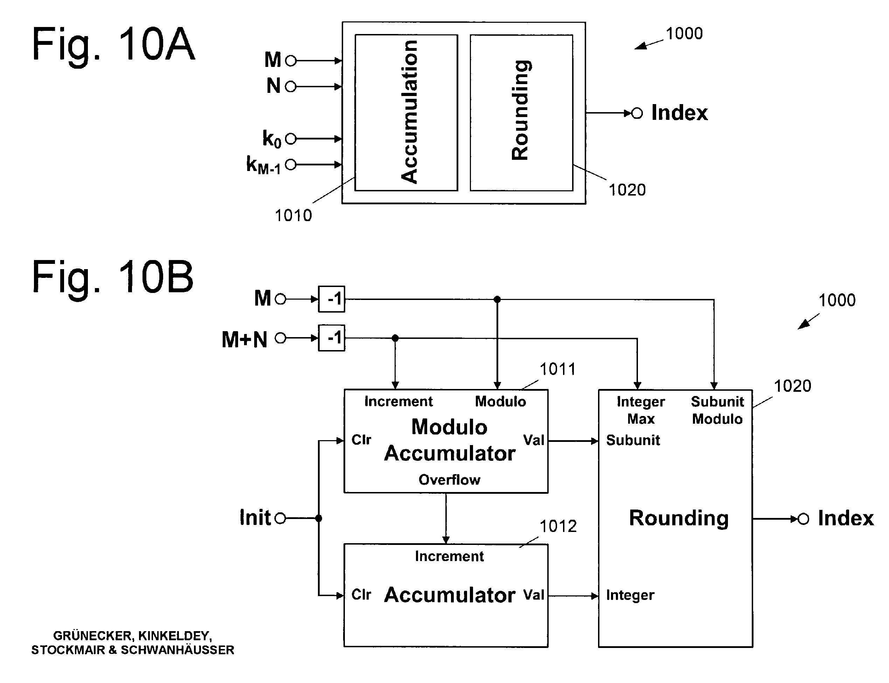

Figure 10A shows a block diagram of a mapping unit for mapping signaling cells to slot cells according to a preferred embodiment of the present invention. The mapping unit 1000 comprises an accumulation unit 1010 and a rounding unit 1020. For each new slot, the accumulation unit 1010 is initialized with k₀, which is the conceptual index of the first signaling cell. The conceptual indices of the subsequent signaling cells are computed sequentially by accumulating the increment value D = (k_{M-1}-k₀)/(M-1). After M-1 steps, the accumulation unit 1010 will contain the conceptual index of the last signaling cell, i.e. k_{M-1}. The output of the accumulation unit 1010 is fed to the rounding unit for rounding the conceptual index to the mapping index as explained above in conjunction with Fig. 8.

According to a preferred embodiment of the present invention, the mapping indices of the signaling cells can be computed by using integer arithmetic only. This embodiment is particularly suitable for hardware implementation.

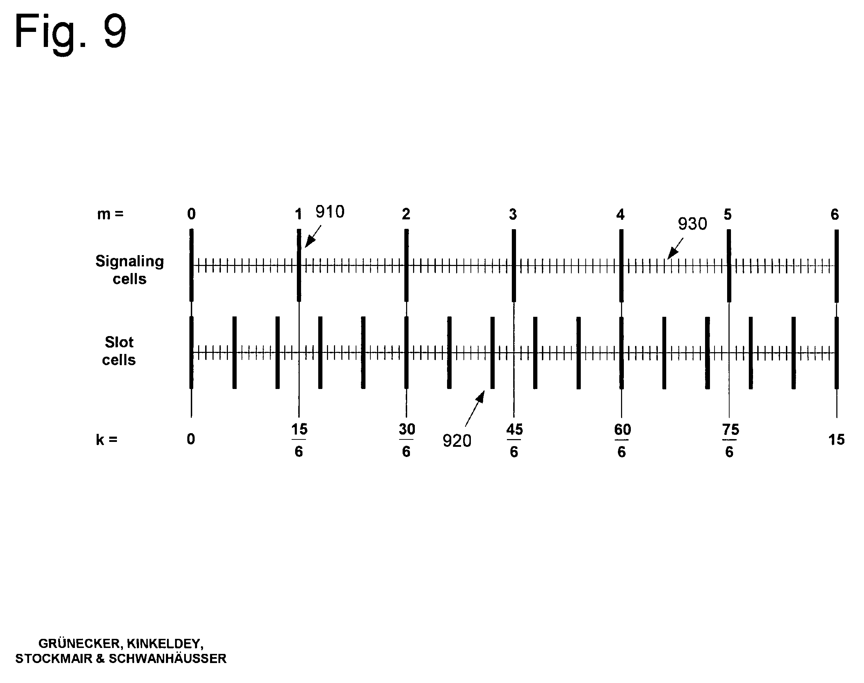

The first step is to understand that all signaling cells (910) and slot cells (920) are located on a common fine grid (930), as indicated in Figure 9. In the general case, the number of fine grid divisions is (*M*-1)(*M*+*N*-1) over the whole interval. Therefore, the spacing between two signaling cells is *M*+*N*-1, and the spacing between two slot cells is *M*-1.

From Fig. 9 it is also apparent that the conceptual positions of the signaling cells can be expressed as a fraction with denominator *M*-1. For each signaling cell, the numerator can be computed by repeatedly accumulating *M*+*N*-1, starting from 0 for the first signaling cell. In other words, the numerator of the conceptual position of a signaling cell can be computed from the conceptual position of the previous signaling cell by adding *M*+*N*-1 to the numerator. The actual position (mapping index) of a signaling cell can then be derived from its conceptual position by applying the appropriate rounding operation. Hence, the mapping indices for all signaling cells can be easily computed in an iterative or sequential manner.

Fig. 10B is a block diagram of a hardware-implemented mapping unit (1000) for determining a mapping index for each signaling cell according to an embodiment of the present invention.

The mapping unit comprises a modulo accumulator (1011), an overflow accumulator (1012) for the integer overflow, and a rounding unit (1020). For each new slot, both accumulators (1011, 1012) are initialized with zero via a reset signal (Clr). For each signaling cell, *M*+*N*-1 is added to the modulo accumulator (1011), the resulting integer overflow being accumulated in the overflow accumulator (1012). Thus, the modulo accumulator (1011) will contain the subunit part of the conceptual position of the signaling cells, and the overflow accumulator (1012) the integer part thereof. Both subunit and integer parts are fed to the rounding block (1020), which computes the final mapping index by conditionally incrementing the integer part. Thus, the circuit computes the mapping indices of the signaling cells sequentially.

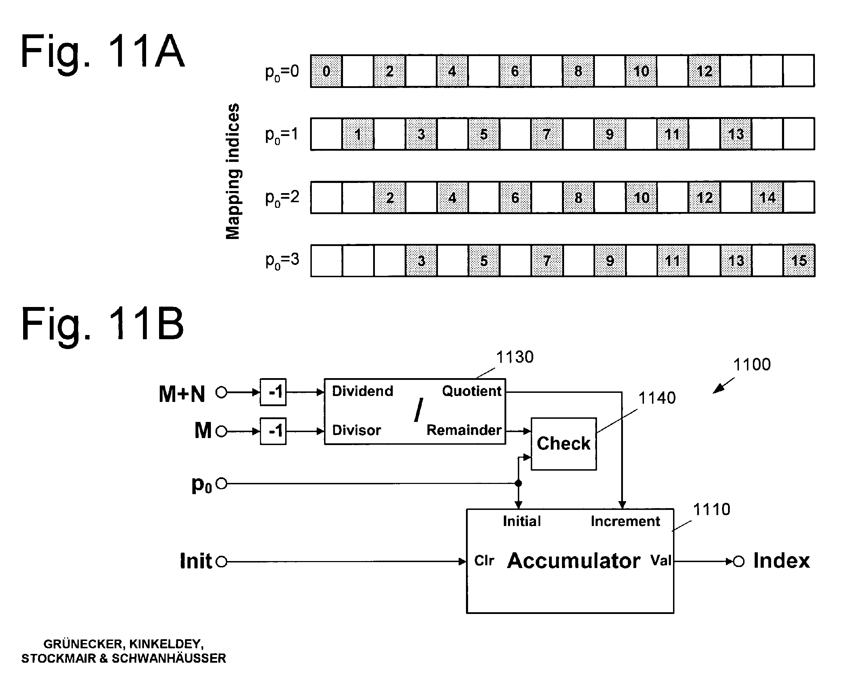

Figure 11 illustrates another preferred embodiment of the present invention. In accordance with this embodiment, and in contrast to the embodiments described above, the mapping indices are now guaranteed to be equidistant. To this end, the first signaling cell is mapped on slot cell *p*₀*,* where *p*₀ is any non-negative integer for which floor((*M*+*N*-1-p₀)/(*M*-1)) = floor((*M*+*N*-1)/(*M*-1)), preferably *p*₀ = 0. Here, the floor() operator returns the nearest smaller integer. This condition is fulfilled if *p*₀ does not exceed the remainder of the division of (*M*+*N*-1) by (*M*-1). For the considered example, i.e. *M*=7 and *M*+*N*=16, the resulting remainder of 15/6 is 3, therefore *p*₀ can be one of: 0, 1, 2, 3. In contrast to the embodiments described above, where we set conceptual indices *k*₀ and *k*_{*M*-1} for the first and the last signaling cell, respectively, we set now the integer mapping index for the first signaling cell directly. No mapping index is set for the last signaling cell at this point.

In a second step, an integer increment *D* is computed according to the formula: *D* = floor((*M*+*N*-1)/(*M*-1)). In our example, the resulting value for *D* is 2. The increment *D* can be also expressed as the quotient of the division of (*M*+*N*-1) by (*M*-1)*.* In contrast to the embodiments described above, where the resulting increment is real, the increment is now constrained to an integer.

In a third step, the integer mapping indices of the signaling cells are computed according to the formula *pₘ*= *p*₀+*m D*, where *m* is the signaling cell index from 0 to *M*-1. The above conditions ensure that the resulting mapping index of the last signaling cell does not exceed *M*+*N*-1.

Fig. 11A shows the resulting mapping for all four values of po: 0, 1, 2, and 3.

This embodiment has the advantage that the mapping indices of the signaling cells are computed using an integer accumulation and no extra rounding is required. However, the computation of the increment requires a division.

The block diagram of a possible implementation of a mapping unit according to this embodiment is shown in Figure 11B. The mapping unit comprises a divider 1130 for computing the increment D and an accumulator 1110 for computing the mapping indices. For each new slot, the integer accumulator is initialized with *p*₀. For each signaling cell, the computed increment *D* is added. The value of the accumulator can be directly used as the mapping index.

The increment *D* is calculated as the quotient of the division of (*M+N*-1) by (*M*-1). The remainder of this division can be used for checking if *p*₀ has a legal value, e.g. via the check unit 1140. It is worth mentioning that only one division operation is required for each slot, which allows a slower sequential division algorithm to be used.

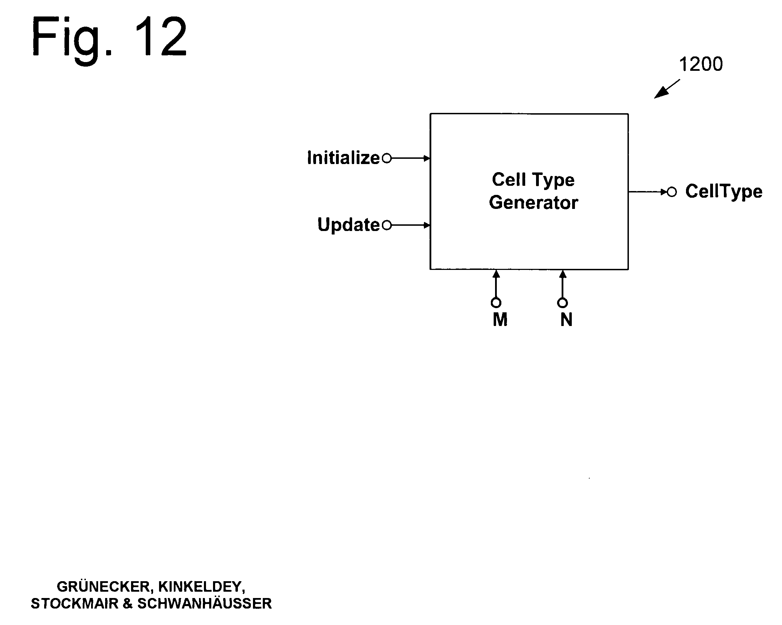

Figure 12 is a block diagram of a generic cell type generation block that computes the cell type (logical value, e.g. 0=signaling, 1=payload), according to the mapping algorithm, for all cells of the considered service. The block takes only M (number of signaling cells) and N (number of data cells) as parameters. The block is initialized for each new frame/slot and updated for each new cell. The cell type generation block operates with the output rate, generating in each step the decision whether the current cell is signaling or payload.

It is a particular advantage of the present invention, that the same cell type generator may be used in both the receiver and the transmitter, albeit in different configurations. A possible solution, but not the only one, is presented in the following.

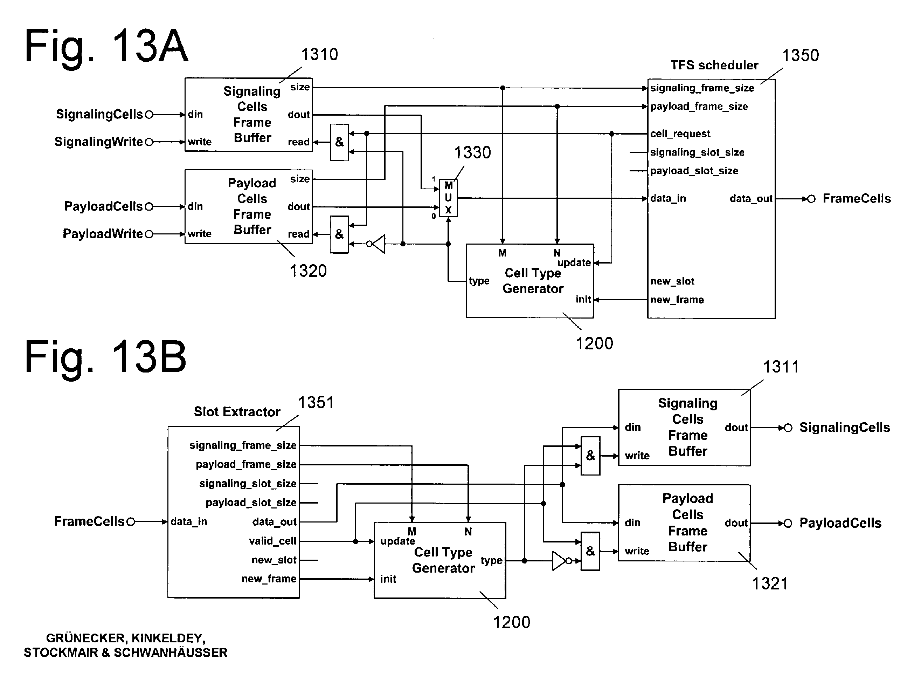

Figure 13A is a block diagram of a transmitter according to an embodiment of the present invention. The transmitter comprises a signaling cells frame buffer 1310, a payload cells frame buffer 1320, a multiplexer 1330, a cell type generator 1200, and a TFS scheduler 1350.

In this transmitter, the chain works in pull mode, whereby the cells are requested by the TFS scheduler via the cell_request signal. Depending on the cell type, which is decided by the cell type generator as explained above in conjunction with Fig. 12, the requested cell is read either from the signaling cells frame buffer 1310 or from the payload cells frame buffer 1320 via the multiplexer 1330. The design must ensure that the buffers never get empty.

The M and N parameters depend on the particulars of the mapping algorithm. In case of the first embodiment of the present invention, M and N are the frame sizes for signaling and payload respectively, as provided by the two frame buffers. In this case, the cell type generator is initialized for every frame. This is the recommended case, as shown in Figure 13A. In case of the second embodiment of the present invention, M and N are the slot sizes for signaling and payload, respectively, as computed by the scheduler based on the frame sizes provided by the two buffers. In this case, the cell type generator is initialized for every slot.

Figure 13B is a block diagram of a receiver according to an embodiment of the present invention. The receiver comprises a signaling cells frame buffer 1311, a payload cells frame buffer 1321, a cell type generator 1200, and a slot extractor 1351.

In the receiver, signaling cells must be separated from payload cells and the chain operates in pull mode, whereby the received cells are written to the receiver buffers 1311, 1321 by the slot extractor 1351, as shown in Figure 13B. Depending on the cell type, which is decided by the cell type generator as explained above in conjunction with Fig. 12, the received cells are written either to the output signaling buffer 1311 or to the output payload buffer 1321. There is no request signal like in the previous case. The design must ensure that the buffers never get full.

In analogy to the transmitter, the parameters M and N depend on the solution implemented. In case of the first embodiment of the present invention, M and N are the frame sizes for signaling and payload, respectively, as signaled by the transmitter. In this case, the cell type generator is initialized for every frame. This is the preferred case, as shown in Figure 13B. In case of the second embodiment of the present invention, M and N are the slot sizes for signaling and payload respectively, as signaled by the transmitter. In this case, the cell type generator is initialized for every slot.

The above described implementations are provided for demonstrating that the proposed solution is implementable in hardware. The scope of the present invention, however, is not restricted to these specific implementations but defined by the subject matter of the enclosed claims.

Although the present invention has been described in the context of orthogonal frequency-division multiplexing and DVB-T2, it may also be applied to other modulation techniques and other communication systems. In particular, the present invention can be applied to any frame-based digital communication system in order to transmit signaling information with improved time diversity.

Summarizing, the present invention relates to improving reception robustness of signaling data in a frame-based communication system with variable slot-allocation. To this end, the present invention provides a method and a corresponding apparatus to maximize the time/frequency diversity of the signaling data. This is achieved by spreading the signaling data evenly over all slots in a frame.

## Claims

1. A method for transmitting signaling information in a frame-based communication system, each frame comprising a plurality of slots, each slot comprising a plurality of cells, said method comprising the steps of
obtaining signaling information (340), said signaling information (340) consisting of a plurality of words;
obtaining payload data (330) to be transmitted within a slot of a current frame, said payload data (330) consisting of a plurality of words;
mapping each word of the signaling information (340) and the payload data (330) to a distinct cell of said slot in accordance with a predefined mapping scheme so that cells to which a word of the signaling information (340) is mapped are distributed over said slot.

2. A method according to claim 1, wherein at least two consecutive words of the signaling information (340) are mapped to two non-consecutive cells, and wherein at least one word of the payload data (330) is mapped to the at least one cell inbetween the two non-consecutive cells.

3. A method according to claim 1 or 2, wherein cells to which a word of the signaling information (340) is mapped are evenly distributed over said slot.

4. A method according to any of claims 1 to 3, wherein the first word of the signaling information (340) is mapped to the first cell of said slot.

5. A method according to any of claims 1 to 4, wherein the last word of the signaling information (340) is mapped to the last cell of said slot.

6. A method according to any of claims 1 to 5, wherein said slot consists of a plurality of contiguous cells.

7. A method according to any of claims 1 to 5, wherein said slot comprises at least two sub-slots, each sub-slot consisting of a plurality of contiguous cells, the at least two sub-slots being arranged within the current frame so that they are separated by cells of the current frame that are not part of said slot.

8. A method according to any of claims 1 to 7, wherein the communication system is based on orthogonal frequency-division multiplexing.

9. A method according to any of claims 1 to 8, wherein the signaling information (340) indicates a slot allocation in a communication system with variable slot allocation.

10. A method according to claim 9, wherein the signaling information (340) indicates offset and length of a future slot within a future frame, said future slot carrying payload data related to the payload data (330) transmitted within the current frame.

11. A method according to any of claims 1 to 10, further comprising the step of
computing for each word of the signaling information (340) a conceptual position (k), the conceptual positions of all words of the signaling information (340) being equidistant elements of a predetermined interval of numbers, each cell of the slot being associated with a distinct element of said predetermined interval of numbers, and wherein
each word of the signaling information (340) is mapped to a cell in accordance with the conceptual position (k) and the association of cells to elements of the predetermined interval of numbers.

12. A method according to claim 11, wherein the predetermined interval of numbers consists of non-negative integers smaller than or equal to the number of cells within said slot (M+N) minus 1, and wherein each word of the signaling information (340) is mapped to a cell of said slot, said cell being indicated by the conceptual position (k) of the word.

13. A method according to claim 11, wherein the predetermined interval of numbers consists of non-negative reals smaller than or equal to the number of cells within said slot (M+N) minus 1, and wherein the mapping step further comprises the step of
computing for each word of the signaling information (340) a mapping index (p) by applying a rounding operator to the conceptual position (k) of the word, the mapping index (p) being an integer indicating a cell of said slot; and
wherein each word of the signaling information (340) is mapped to the cell indicated by the mapping index (p) of the word.

14. A method according to claim 13, wherein the mapping index (p) is a non-negative integer smaller than the number of cells within said slot (M+N).

15. A method according to any of claims 11 to 14, wherein the step of computing the conceptual position (k) of a word comprises the steps of
assigning a first predetermined number (k₀) to the conceptional position if the word is the first word of the signaling information (340), the first predetermined number (k₀) being an element of the predetermined interval of numbers;
assigning a second predetermined number (k_{M-1}) to the conceptional position if the word is the last word of the signaling information (340), the second predetermined number (k_{M-1}) being an element of the predetermined interval of numbers; and
assigning conceptual positions larger than the first predetermined number (k₀) and smaller than the second predetermined number (k_{M-1}) to words other than the first and the last word of the signaling information (340).

16. A method according to claim 15, wherein the step of computing the conceptual position (k) of a current word comprises adding an increment value (D) to the conceptual position (k) of a word preceding the current word.

17. A method according to claim 15, wherein the step of computing the conceptual position (k) of a current word comprises multiplying an index indicating a position of the current word within the signaling information (340) with an increment value (D).

18. A method according to claim 17, wherein the step of computing the conceptual position (k) of a current word further comprises adding the first predetermined number (k₀) to a result of the multiplying step.

19. A method according to any of claims 16 to 18, wherein the increment value (D) is the ratio of the difference of the second and the first predetermined number (k_{M-1}, k₀) and the number of words of signaling information (340) obtained (M) minus 1.

20. A method according to any of claims 16 to 18, wherein the increment value (D) is the largest integer smaller than the ratio of the difference of the second and the first predetermined number (k_{M-1}, k₀) and the number of words of signaling information (340) obtained (M) minus 1.

21. A method according to claim 15, wherein the conceptual position (k) of a word is expressed as a fraction with denominator equal to the number of words of signaling information (340) obtained (M) minus 1.

22. A method according to claim 21, wherein the step of computing the conceptual position (k) of a current word further comprises adding the difference of the second and the first predetermined number (k_{M-1}, k₀) to the numerator of the conceptual position (k) of a word preceding the current word.

23. A method according to any of claims 15 to 22, wherein the first predetermined number (k₀) is an integer.

24. A method according to any of claims 15 to 23, wherein the second predetermined number (k_{M-1}) is an integer.

25. A method according to any of claims 15 to 24, wherein the first predetermined number (k₀) is equal to zero.

26. A method according to any of claims 15 to 25, wherein the second predetermined number (k_{M-1}) is equal to the number of cells within said slot (M+N) minus 1.

27. A method according to any of claims 15 to 26, wherein the second predetermined number (k_{M-1}) is greater than or equal to the first predetermined number (k₀) plus the number of words of signaling information (340) obtained (M) minus 1.

28. A method according to any of claims 13 to 27, wherein the rounding operator yields the largest integer smaller than or equal to the conceptual position (k).

29. A method according to any of claims 13 to 27, wherein the rounding operator yields the smallest integer greater than or equal to the conceptual position (k).

30. A method according to any of claims 13 to 27, wherein the rounding operator yields the largest integer smaller than or equal to the conceptual position (k) plus 0.5.

31. A method according to any of claims 13 to 27, wherein the rounding operator yields the smallest integer greater than or equal to the conceptual position (k) minus 0.5.

32. A method according to any of claims 13 to 27, wherein the rounding operator yields the largest integer smaller than or equal to the conceptual position (k) plus 0.5 if the conceptual position (k) is smaller than half the number of cells within said slot (M+N) and yields the smallest integer greater than or equal to the conceptual position (k) minus 0.5 if the conceptual position (k) is greater than half the number of cells within said slot (M+N).

33. A method according to any of claims 13 to 27, wherein the rounding operator yields the largest integer smaller than or equal to the conceptual position (k) plus 0.5 if the conceptual position (k) is greater than half the number of cells within said slot (M+N) and yields the smallest integer greater than or equal to the conceptual position (k) minus 0.5 if the conceptual position (k) is smaller than half the number of cells within said slot (M+N).

34. A method according to claim 32 or 33, wherein the rounding operator yields the largest integer smaller than or equal to the conceptual position (k) plus 0.5 if the conceptual position (k) is equal to half the number of cells within said slot (M+N).

35. A method according to claim 32 or 33, wherein the rounding operator yields the smallest integer greater than or equal to the conceptual position (k) minus 0.5 if the conceptual position (k) is equal to half the number of cells within said slot (M+N).

36. A method for receiving signaling information (340) in a frame-based communication system with variable slot allocation, each frame comprising a plurality of slots, each slot comprising a plurality of cells, said method comprising the steps of
receiving a block of data transmitted within a slot of a current frame;
demultiplexing the block of data in accordance with the predefined mapping scheme of any of claims 1 to 35 in order to recover signaling information (340) and payload data (330).

37. A computer program product comprising a computer readable medium having computer readable program code embodied thereon, the program code being adapted to carry out all steps of a method according to any of claims 1 to 36.

38. An apparatus for transmitting signaling information (340) in a frame-based communication system, each frame comprising a plurality of slots, each slot comprising a plurality of cells, said apparatus comprising:
a first input means (1310) for obtaining signaling information (340), said signaling information (340) consisting of a plurality of words;
a second input means (1320) for obtaining payload data (330) to be transmitted within a slot of a current frame, said payload data (330) consisting of a plurality of words;
a mapping means (1200, 1330) for mapping each word of the signaling information (340) and the payload data (330) to a distinct cell of said slot in accordance with a predefined mapping scheme so that cells to which a word of the signaling information (340) is mapped are distributed over said slot.

39. An apparatus according to claim 38, wherein the mapping means (1200, 1330) is adapted to map at least two consecutive words of the signaling information (340) to two non-consecutive cells, and to map at least one word of the payload data (330) to the at least one cell inbetween the two non-consecutive cells.

40. An apparatus according to claim 38 or 39, wherein cells to which a word of the signaling information (340) is mapped are evenly distributed over said slot.

41. An apparatus according to any of claims 38 to 40, wherein the first word of the signaling information (340) is mapped to the first cell of said slot.

42. An apparatus according to any of claims 38 to 41, wherein the last word of the signaling information (340) is mapped to the last cell of said slot.

43. An apparatus according to any of claims 38 to 42, wherein said slot consists of a plurality of contiguous cells.

44. An apparatus according to any of claims 38 to 42, wherein said slot comprises at least two sub-slots, each sub-slot consisting of a plurality of contiguous cells, the at least two sub-slots being arranged within the current frame so that they are separated by cells of the current frame that are not part of said slot.

45. An apparatus according to any of claims 38 to 44, wherein the communication system is based on orthogonal frequency-division multiplexing.

46. An apparatus according to any of claims 38 to 45, wherein the signaling information (340) indicates a slot allocation in a communication system with variable slot allocation.

47. An apparatus according to claim 46, wherein the signaling information (340) indicates offset and length of a future slot within a future frame, said future slot carrying payload data related to the payload data (330) transmitted within the current frame.

48. An apparatus according to any of claims 38 to 47, further comprising
a first computing unit (1010; 1110) for computing for each word of the signaling information (340) a conceptual position (k), the conceptual positions of all words of the signaling information (340) being equidistant elements of a predetermined interval of numbers, each cell of the slot being associated with a distinct element of said predetermined interval of numbers, and wherein
each word of the signaling information (340) is mapped to a cell in accordance with the conceptual position (k) and the association of cells to elements of the predetermined interval of numbers.

49. An apparatus according to claim 48, wherein the predetermined interval of numbers consists of non-negative integers smaller than or equal to the number of cells within said slot (M+N) minus 1, and wherein each word of the signaling information (340) is mapped to a cell of said slot, said cell being indicated by the conceptual position (k) of the word.

50. An apparatus according to claim 48, wherein the predetermined interval of numbers consists of non-negative reals smaller than or equal to the number of cells within said slot (M+N) minus 1, and wherein the mapping means (1200, 1330) further comprises
a second computing unit (1020) for computing for each word of the signaling information (340) a mapping index (p) by applying a rounding operator to the conceptual position (k) of the word, the mapping index (p) being an integer
indicating a cell of said slot; and
wherein each word of the signaling information (340) is mapped to the cell indicated by the mapping index (p) of the word.

51. An apparatus according to claim 49, wherein the mapping index (p) is a non-negative integer smaller than the number of cells within said slot (M+N).

52. An apparatus according to any of claims 48 to 51, wherein the first computing unit (1010; 1110) is adapted is adapted for
assigning a first predetermined number (k₀) to the conceptional position if the word is the first word of the signaling information (340), the first predetermined number (k₀) being an element of the predetermined interval of numbers;
assigning a second predetermined number (k_{M-1}) to the conceptional position if the word is the last word of the signaling information (340), the second predetermined number (k_{M-1}) being an element of the predetermined interval of numbers; and
assigning conceptual positions larger than the first predetermined number (k₀) and smaller than the second predetermined number (k_{M-1}) to words other than the first and the last word of the signaling information (340).

53. An apparatus according to claim 52, wherein the first computing unit (1010; 1110) comprises an adder for adding an increment value (D) to the conceptual position (k) of a word preceding the current word.

54. An apparatus according to claim 52, wherein the first computing unit (1010; 1110) comprises a multiplier for multiplying an index indicating a position of the current word within the signaling information (340) with an increment value (D).

55. An apparatus according to claim 54, wherein the first computing unit (1010; 1110) further comprises an adder for adding the first predetermined number (k₀) to an output of the multiplier.

56. An apparatus according to any of claims 53 to 55, wherein the increment value (D) is the ratio of the difference of the second and the first predetermined number (k_{M-1}, k₀) and the number of words of signaling information (340) obtained (M) minus 1.

57. An apparatus according to any of claims 53 to 55, wherein the increment value (D) is the largest integer smaller than the ratio of the difference of the second and the first predetermined number (k_{M-1}, k₀) and the number of words of signaling information (340) obtained (M) minus 1.

58. An apparatus according to claim 52, wherein the conceptual position (k) of a word is expressed as a fraction with denominator equal to the number of words of signaling information (340) obtained (M) minus 1.

59. An apparatus according to claim 58, wherein the first computing unit (1010; 1110) further comprises an adder for adding the difference of the second and the first predetermined number (k_{M-1}, k₀) to the numerator of the conceptual position (k) of a word preceding the current word.

60. An apparatus according to any of claims 52 to 59, wherein the first predetermined number (k₀) is an integer.

61. An apparatus according to any of claims 52 to 60, wherein the second predetermined number (k_{M-1}) is an integer.

62. An apparatus according to any of claims 52 to 61, wherein the first predetermined number (k₀) is equal to zero.

63. An apparatus according to any of claims 52 to 62, wherein the second predetermined number (k_{M-1}) is equal to the number of cells within said slot (M+N) minus 1.

64. An apparatus according to any of claims 52 to 63, wherein the second predetermined number (k_{M-1}) is greater than or equal to the first predetermined number (k₀) plus the number of words of signaling information (340) obtained (M) minus 1.

65. An apparatus according to any of claims 50 to 64, wherein the rounding operator yields the largest integer smaller than or equal to the conceptual position (k).

66. An apparatus according to any of claims 50 to 64, wherein the rounding operator yields the smallest integer greater than or equal to the conceptual position (k).

67. An apparatus according to any of claims 50 to 64, wherein the rounding operator yields the largest integer smaller than or equal to the conceptual position (k) plus 0.5.

68. An apparatus according to any of claims 50 to 64, wherein the rounding operator yields the smallest integer greater than or equal to the conceptual position (k) minus 0.5.

69. An apparatus according to any of claims 50 to 64, wherein the rounding operator yields the largest integer smaller than or equal to the conceptual position (k) plus 0.5 if the conceptual position (k) is smaller than half the number of cells within said slot (M+N) and yields the smallest integer greater than or equal to the conceptual position (k) minus 0.5 if the conceptual position (k) is greater than half the number of cells within said slot (M+N).

70. An apparatus according to any of claims 50 to 64, wherein the rounding operator yields the largest integer smaller than or equal to the conceptual position (k) plus 0.5 if the conceptual position (k) is greater than half the number of cells within said slot (M+N) and yields the smallest integer greater than or equal to the conceptual position (k) minus 0.5 if the conceptual position (k) is smaller than half the number of cells within said slot (M+N).

71. An apparatus according to claim 69 or 70, wherein the rounding operator yields the largest integer smaller than or equal to the conceptual position (k) plus 0.5 if the conceptual position (k) is equal to half the number of cells within said slot (M+N).

72. An apparatus according to claim 69 or 70, wherein the rounding operator yields the smallest integer greater than or equal to the conceptual position (k) minus 0.5 if the conceptual position (k) is equal to half the number of cells within said slot (M+N).

73. A cell type generator for a frame-based communication system, the cell type generator receiving the number of signaling cells (M) and the number of payload cells (N) within a slot of a current frame, said cell type generator generating an output signal indicating sequentially for each cell of said slot a cell type, the cell type being either signaling or payload, in accordance with the predefined mapping scheme of any of claims 38 to 72.

74. An apparatus for receiving signaling information in a frame-based communication system with variable slot allocation, each frame comprising a plurality of slots, each slot comprising a plurality of cells, said apparatus comprising
a slot extractor (1351) for receiving a block of data transmitted within a slot of a current frame;
a demultiplexer (1200) for demultiplexing the block of data in accordance with the predefined mapping scheme of any of claims 38 to 72 in order to recover signaling information (340) and payload data (330).
